# EUROPEAN PATENT SPECIFICATION

(11) **EP 2 947 818 B1**
(45) Date of publication and mention of the grant of the patent: **12.04.2017**
(21) Application number: 14305727.1
(22) Date of filing: 19.05.2014
(51) Int. Cl.: H04L 12/24, H04Q 11/00

(54) **A method and device for operating an optical transport network**
Verfahren und Vorrichtung zum Betrieb eines optischen Transportnetzwerks
Procédé et dispositif pour faire fonctionner un réseau de transport optique

(43) Date of publication of application: 25.11.2015
(73) Proprietor: ALCATEL LUCENT, 92100 Boulogne-Billancourt (FR)
(72) Inventor: Leven, Andreas, 70435 Stuttgart (DE); Dembeck, Lars, 70435 Stuttgart (DE); Ilchmann, Frank, 70435 Stuttgart (DE)
(74) Representative: Kröhnert, Michael

(56) References cited:
- COUDERT D ET AL: "On Rerouting Connection Requests in Networks with Shared Bandwidth", ELECTRONIC NOTES IN DISCRETE MATHEMATICS, NORTH-HOLLAND, AMSTERDAM, NL, vol. 32, 15 March 2009 (2009-03-15), pages 109-116, XP025968891, ISSN: 1571-0653, DOI: 10.1016/J.ENDM.2009.02.015 [retrieved on 2009-03-10]

## Description

### Field of the Invention

The present invention relates to a method of operating an optical transport network and a corresponding device.

### Background of the Invention

Optical transport networks are statically operated. This means changes take place a few times per year or are pre-planned. This allows to use offline routing tools to find the best paths using heuristic routing algorithms operating on all established and any demanded new connections to dimension and optimize the network considering the whole optical transport network.

However considering the whole optical transport network and processing all established and any demanded new connection requires a lot of time and resources and may lead to instable network performance due to the huge amount of required changes.

The document "D. Coudert, D. Mazauric, and N. Nisse. , 'On Rerouting Connection Requests in Networks with Shared Bandwidth', in A. Koster and V. Lozin, editors, DIMAP workshop on Algorithmic Graph Theory (AGT09), volume 32 of Electronic Notes in Discrete Mathematics, Warwick, UK, pages 109-116, March 2009" discloses a method for rerouting single connections in an optical transport network following demands. Existing connections are switched from a current routing to a new pre-computed routing using a dependency digraph and subgraphs, which are a representation of the order according to which existing connections are to be switched in order to minimise the number of connections to be interrupted.

### Summary of the Invention

The object of the invention is thus to provide effective and robust operation that can be applied either offline or in real-time scenarios and allow more frequent rearrangement of the optical transportation network.

The main idea of the invention is a method of operating an optical transport network comprising,
- detecting a demand for connecting a first network node of a predetermined first network part of said optical transport network and a second network node of a predetermined second network part of said optical transport network,
- searching in predetermined network topology information a first connection characterized by
   a resource allocated for said first connection to connect said predetermined first network part of said optical network to said predetermined second network part of said optical network, and
   either another resource allocated for said first connection to connect said first network part and said second network part of said optical network or two other resources allocated for said first connection to connect said first network part and said second network part of said optical network to a predetermined third network part of said optical network respectively,
- rerouting said first connection.
This provides an effective identification of a candidate for rerouting within already established connections and a robust rerouting of the candidate to optimize the network resources for incremental changes to the optical transport network.

Advantageously said resource is occupied. This increases the effectiveness of the identification of the candidate further.

Advantageously a second connection is routed between said first network node of said first network part and said second network node of said second network part along a path allocating at least said resource upon successful rerouting of said first connection. This way a demanded new connection is established efficiently offline or in real-time.

Advantageously said second connection is routed by determining said path for said second connection within a predetermined fourth network part of said optical transport network. This increases the efficiency of the routing for a demanded new connection.

Advantageously from said predetermined network topology information a part of said optical transport network is determined that is characterized in that the resource of any optical link separating said network part from the rest of the optical transport network is occupied, and that the resource of any optical link contained in said network part is not occupied. This further increases the efficiency of the routing.

Advantageously said first connection is characterized by a path allocating resources on at least two optical links connecting said first network part and said second network part of said optical transport network. This is one way to identify a relevant candidate connection for rerouting efficiently in the search.

Advantageously said first connection is characterized by a path allocating resources on a first optical link connecting said first network part to said second network part of said optical network, a second optical link connecting said first network part to said third network part of said optical transport network and a third optical link connecting said second network part to said third network part of said optical transport network. This is another way to identify a relevant candidate connection for rerouting efficiently in the search.

Advantageously determining said first network part, said second network part, said third network part or said fourth network part of said optical transport network comprises accessing memory comprising a predetermined graph representation of said network topology of said optical transport network to remove any edge of said predetermined graph representing an occupied optical link to determine sub-graphs representing said network parts of said optical transport network. This increases the efficiency further.

Advantageously said resource is a data container or a wavelength of an optical link. This way a factor relevant for limiting the capacity of optical links is considered.
The invention concerns also a device for operating an optical transport network comprising
- means for detecting a demand for connecting a first network node of a predetermined first network part of said optical transport network and a second network node of a predetermined second network part of said optical transport network,
- means for searching in predetermined network topology information a first connection characterized by
   a resource allocated for said first connection to connect said predetermined first network part of said optical network to said predetermined second network part of said optical network, and
   either another resource allocated for said first connection to connect said first network part and said second network part of said optical network or two other resources allocated for said first connection to connect said first network part and said second network part of said optical network to a predetermined third network part of said optical network respectively,
- means for routing adapted to reroute said first connection.

Advantageously the device comprises means for determining in said optical transport network from said predetermined network topology information a part of said optical transport network, characterized in that the resource of any optical link separating said network part from the rest of the optical transport network is occupied, and in that the resource of any optical link contained in said network part is not occupied.

Further developments of the invention can be gathered from dependent claims and the following description.

### Brief Description of the Drawings

In the following the invention will be explained further making reference to the attached drawings.
- Fig. 1: schematically shows network topology information without connections;
- Fig. 2: schematically shows network topology information including connection information and routed paths;
- Fig. 3: schematically shows network topology information including connection information and unoccupied links;
- Fig. 4: schematically shows network topology information including connection information and routed paths;
- Fig. 5: schematically shows network topology information including connection information and information and unoccupied links;

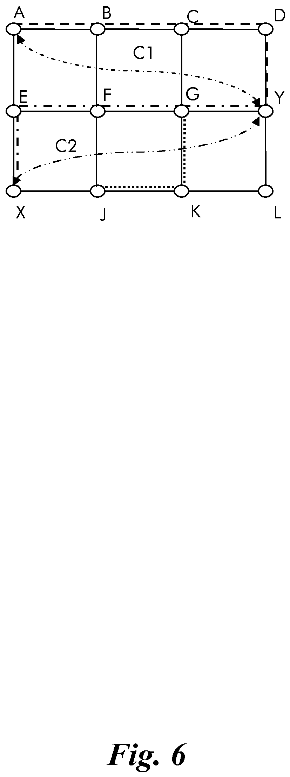

- Fig. 6: schematically shows network topology information including connection information and routed paths;
- Fig. 7: schematically shows network topology information including connection information, routed paths and weights;
- Fig. 8: schematically shows network topology information without connections;
- Fig. 9: schematically shows network topology information including connection information and routed paths;
- Fig. 10: schematically shows network topology information including connection information and unoccupied links;
- Fig. 11: schematically shows network topology information including connection information and routed paths;
- Fig. 12: schematically shows network topology information including connection information and information and unoccupied links;

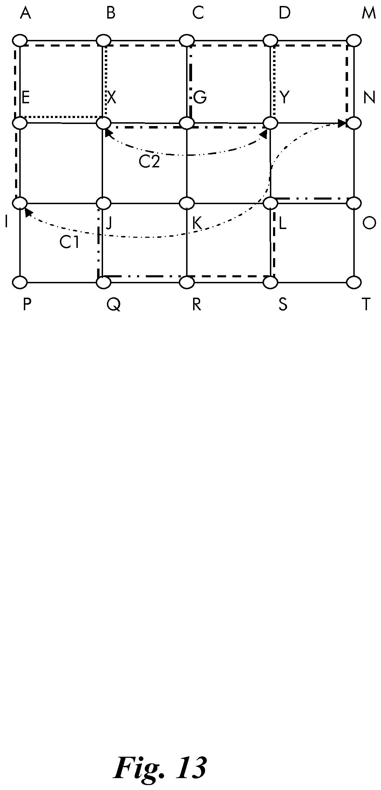

- Fig. 13: schematically shows network topology information including connection information and routed paths;
- Fig. 14: schematically shows network topology information including connection information, routed paths and weights;
- Fig. 15: schematically shows part of an optical transport network according to a first example;
- Fig. 16: schematically shows part of an optical transport network according to a second example;
- Fig. 17: schematically shows a method of operating an optical transport network.

### Detailed Description of the Invention

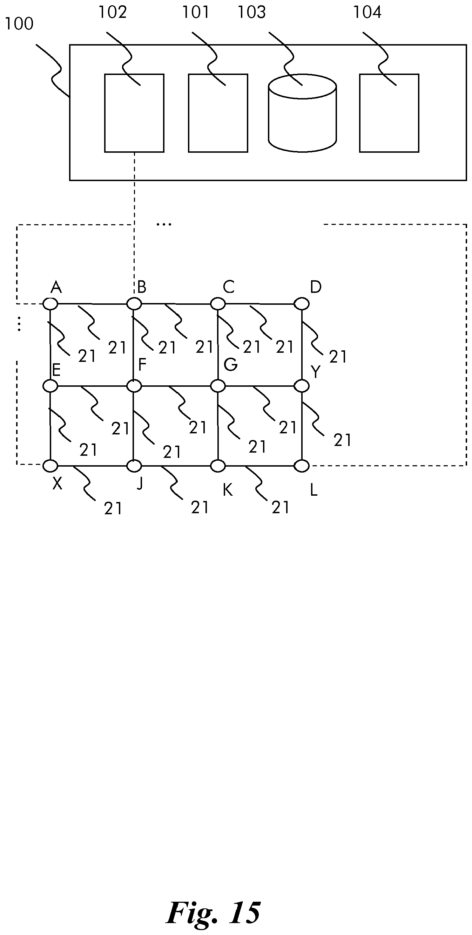

Figure 15 depicts part of an exemplary optical transport network comprising optical network nodes A, ..., G, Y, X, J, K, L connected by optical links 21. In the example said network nodes A, ..., G, Y, X, J, K, L are connected using a grid shaped cabling layout as depicted in figure 15. Other cabling layouts, e.g. a mesh shape, may be used as well.

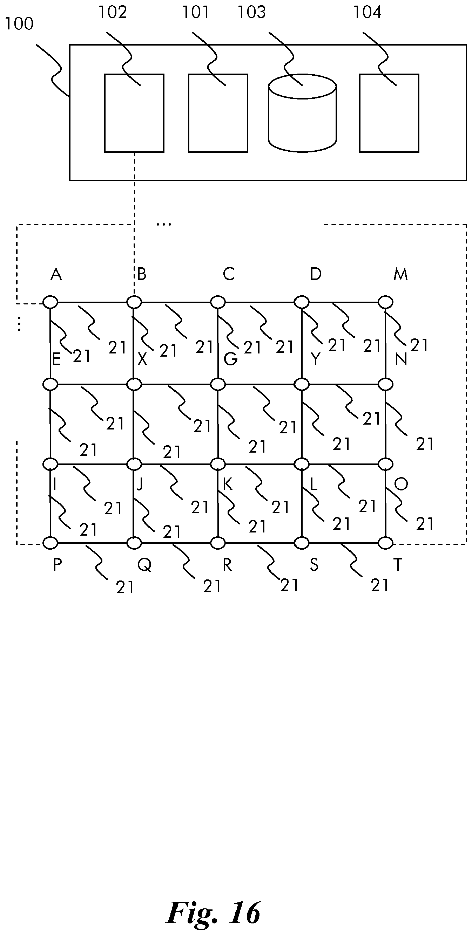

Figure 16 depicts part of an exemplary optical transport network comprising optical network nodes A, ..., E, X, G, Y, I, ..., T connected by optical links 21. In the example said network nodes A, ..., E, X, G, Y, I, ..., T are connected using a grid shaped cabling layout as depicted in figure 16. Other cabling layouts, e.g. a mesh shape, may be used as well.

Said optical network nodes and optical links interact for example according to the well known ITU-T Recommendation G.709/Y.1331 (02/12) to provide multiple functionalities such as transport, multiplexing, switching for optical channels carrying client signals. Said optical network nodes are for example optical transmitter, optical switches, optical receivers. Said optical links 21 comprise for example optical fibers connecting said network nodes.

The idea applies to other protocols as well. For example the synchronous optical networking (well known as SONET) or synchronous digital hierarchy (well known as SDH) may be used.

Establishing a connection in said optical transport network requires routing of a path and allocating resources of the optical transport network, in particular of said optical links 21, along said path. Said path connects the two optical network nodes resembling end points of said connection via at least one of said optical links. New connections can only be established as long as a path allocating unoccupied resources can be found.

In case the cabling layout of the optical network doesn't allow a direct optical link between the endpoints other optical links connecting intermediate network nodes may be allocated in the path as well.

Routing in this context is the process of selecting best paths in the optical transport network. For example the best path has the least latency or delay or the least number of hops, i.e. portions of the path between the endpoints of the connection.

Routing protocols such as open shortest path first (well known as OSPF) are used to determine the best path for any connection. Such protocols may consider already established connections or whether a resource of optical links is occupied or not.

Such resources are for example data container or wavelength of said optical links 21 and amongst other factors define the capacity of said optical links. In optical transport networks data containers may be defined using a data frame structure according to said ITU-T Recommendation G.709. In this case for example maximum capacity of said optical link may be defined as the size of the optical payload unit (well known as OPU). Then several client signals may be mapped into the optical payload unit. The optical link 21 is hence occupied whenever no additional client signal can be mapped into the optical payload unit.

In the following two examples are explained. According to both examples optical links 21 of the optical transport network comprise only fibers supporting one wavelength. In this case the capacity of any optical link 21 is occupied whenever that wavelength is used.

The idea also applies to other cases not limited to one wavelength. In case for example up to 88 wavelengths are supported by one fiber of said optical link 21 said optical link 21 is occupied when all 88 wavelength are allocated by paths of established connections. Likewise using a number "n" of parallel optical links 21 increases the capacity of the optical link 21 n-fold. In any case connections requiring fully allocating all wavelengths or data containers of an optical link 21 occupy this optical link 21 whenever it is allocated along a path of this connection.

Whenever a demand for a new connection is detected a path for this new connection is routed. Routing may fail however because at least one of the resources in any possible path is occupied. This means that the new connection is blocked by already established connections.

Unless ignoring the demanded new connections is an option, in this situation rerouting of at least one already established connection to another path may be appropriate. Given the complexity of the optical transport network rerouting and finding a solution to establish the new connection without permanently or temporarily terminating any existing connection is complex as well.

When optical transport networks are statically operated changes take place a few times per year or are pre-planned. Offline routing tools may be used to find the best paths using heuristic routing algorithms to dimension and optimize the entire network.

However such offline tools don't allow incremental optimization of network resources.

A method of operating an optical transport network is explained now using said two examples. Network topology information is for example predetermined by an administrator of said optical transport network.

Routing information which is derived from network management systems or control plane instances may be used to generate said predetermined network topology. For example the routing engine (well known as GMRE) according to the generalized multi-protocol label switching (well known as GMPLS) is used. Likewise a path computation element (well known as PCE) control solution for deployment in optical transport networks may be used.

Said predetermined network topology information is in both examples represented by a graph in which the network nodes are represented by vertices and the optical links by edges. The idea is not limited to using a graph representation. Instead any other form of describing the network topology, e.g. a matrix, may be used as well.

In both examples said network topology information and hence said graph contain information about the shape of the respective cabling layout of the optical links used to link the respective optical network nodes and may comprise information about paths of established connections between optical network nodes.

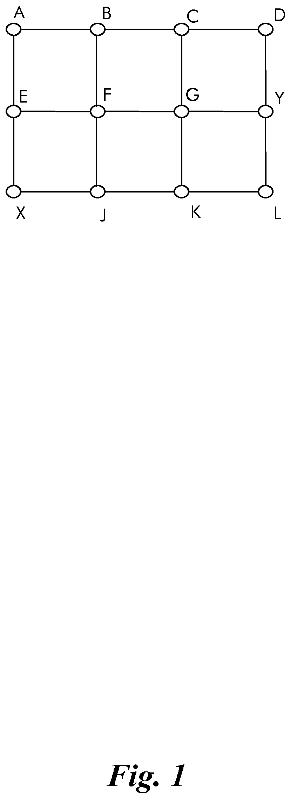

For a first example figure 1 depicts a first network topology graph according to said first example. In this example the optical transport network comprises optical network nodes A, ..., G, Y, X, J, K, L and the optical links 21 connecting them as depicted in figure 1.

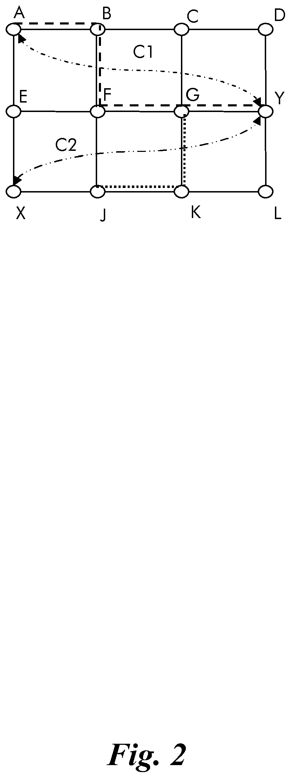

Figure 2 depicts said first network topology graph and additional network topology information including connection information and routed paths according to the first example. According to the first example a first connection C1 is already established between network node A and network node Y. This first connection C1 is depicted as dashed line in figure 2 connecting network node A and network node Y via network nodes B, F, G. Furthermore a second connection C2 connecting network node X and network node Y is demanded in this example. However as depicted in figure 2, a third connection connecting network node J and network note G is already established. This third connection is depicted as dotted line connecting network node J and network node G via network node K.

As can be seen in figure 2, any path for said second connection C2 is blocked by either said first connection C1 or said third connection by occupying the resource of at least one optical link 21 required to route a path for said second connection C2.

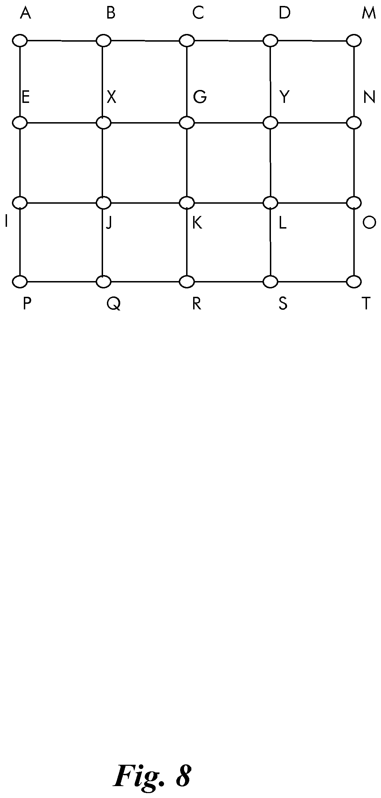

For a second example figure 8 depicts a second network topology graph according to said second example. In this example the optical transport network comprises optical network nodes A, ..., E, X, G, Y, I, ..., T and the optical links 21 connecting them as depicted in figure 8.

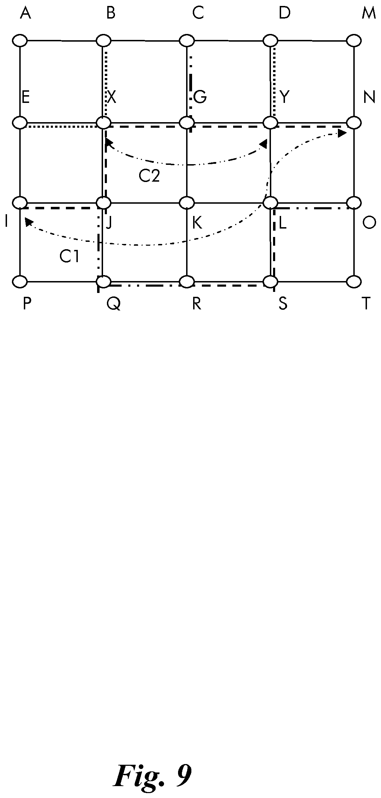

Figure 9 depicts said second network topology graph and additional network topology information including connection information and routed paths according to said second example. According to said second example as said first connection C1 a connection is already established between network node I and network node N. Said first connection C1 is depicted as dashed line in figure 9 connecting network node I and network node N via network nodes J, X, G, Y. Furthermore as said second connection C2 a connection of network node X and network node Y is demanded in this example. However as depicted in figure 9, a third connection connecting network node E and network node B via network node X is already established. This third connection is depicted as dotted line. Furthermore a fourth connection directly connecting network node G and network node C depicted as dash-dotted line is already established. Additionally a fifth connection directly connecting network node Y and network node D depicted as dotted line is already established.
Additionally a sixth connection connecting network node J and network node R via network node Q is already established. This sixth connection is depicted as dash-dotted line.
Additionally a seventh connection connecting network node R and network node L via network nodes S depicted as dashed line is already established. Additionally an eights connection directly connecting network node L and network node O depicted as dash-dotted line is already established.

As can be seen in figure 9, any path for said second connection C2 is blocked by another connection occupying the resource of at least one optical link 21 required to route a path for said second connection C2.

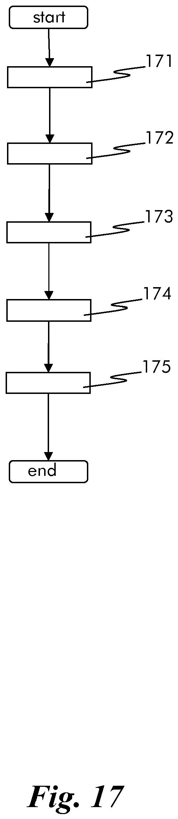

A method for operating said optical transport network is explained for both examples below referencing figure 17. The method for example starts whenever a demand for a new connection is detected. Said demand for said new connection in the example is a demand for connecting a first network node X and a second network node Y.

After the start a step 171 is executed.

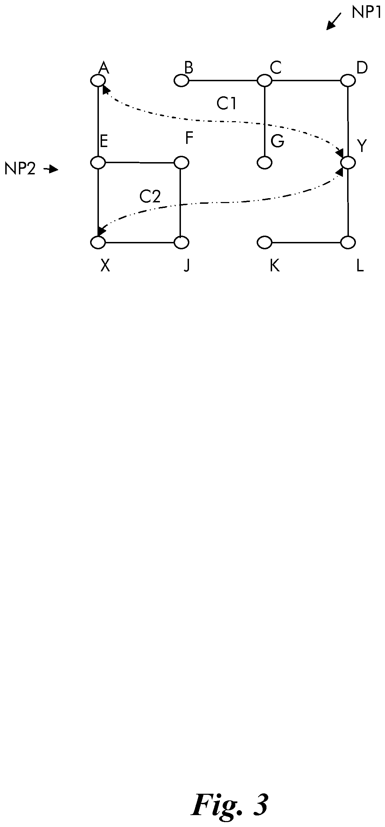

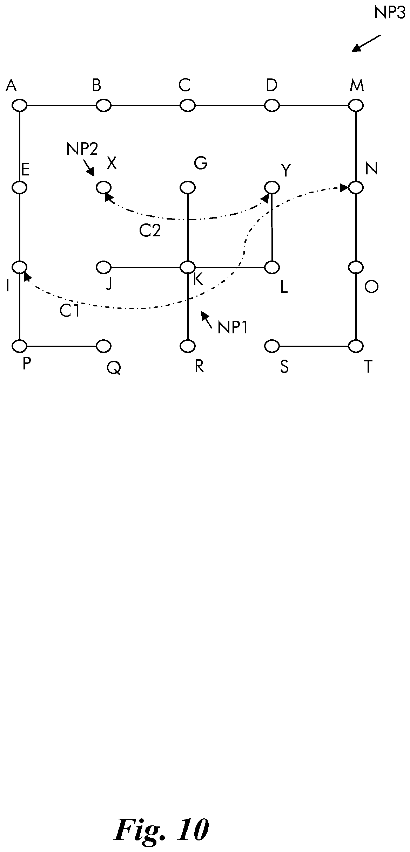

Step 171 comprises determining a network part or network parts of said optical transport network. According to said first example figure 3 depicts a graph representation of a first network part NP1 and a graph representation of a second network part NP2. According to said second example figure 10 depicts another graph representation of another first network part NP1, another graph representation of another second network part NP2 and a graph representation of a third network part NP3.

When a graph representation of the optical transport network is used, this corresponds to creating network sub-graphs. Network sub-graphs are determined in the example described below by excluding fully utilized resources, i.e. resources that are occupied.

Any of said network parts NP1, NP2, NP3 is characterized in that the resource of any optical link 21 separating said network part from the rest of the optical transport network is occupied, and that the resource of any optical link 21 contained in said network part is not occupied.

Depending on the layout of the optical transport network multiple parts of said optical transport network are determined.

In the examples to identify said network parts said predetermined network topology information is read from storage and modified to generate a modified network topology information excluding any optical link 21 with occupied resource. Then said modified network topology information is stored. Said modified network topology information describes predetermined parts of said optical transport network.

In said examples said first network topology graph and said second network topology graph are processed respectively to generate said modified network topology information.

This means that determining said first network part NP1, said second network part NP2 or said third network part NP3 of said optical transport network may comprise accessing memory comprising predetermined graph representation of said network topology of said optical transport network to remove any edge of said predetermined graph representing an occupied optical link 21 to determine sub-graphs representing said network parts NP1, NP2, NP3 of said optical transport network.

Afterwards a step 172 is executed.

In said step 172 a candidate connection for rerouting is identified.

Said candidate connection is identified from already established connections by evaluating said modified network topology information.

To that end said first network part NP1 and said second network part NP2 are identified from all network parts determined in said step 171 as the network parts comprising said first network node X and said second network node Y. This means that said first network part NP1 and said second network part NP2 are determined depending on said demanded new connection so that each part contains one of the end points of said demanded new connection.

Furthermore two cases are distinguished.

In a first case an established connection meanders between said first network part NP1 and said second network part NP2. An example of a meandering connection is depicted according to the first example in figure 3. Said first connection C1 is characterized in this case by two resources allocated to connect said first network part NP1 to said second network part NP2.

As depicted in figure 3, said first network part NP1 comprises the network nodes B, C, D, G, Y, K, L and connecting optical links 21 between network nodes B and K via network nodes C, D, Y, L and an additional optical link 21 between network nodes C and G directly. Said second network part NP2 comprises the network nodes A, E, F, X, J and connecting optical links 21 between network nodes A and F via network nodes E, X, J and an additional optical link 21 between network nodes E and F directly. Said modified network topology information comprises in said first example a first sub-graph as said first network part NP1 and a second sub-graph as said second network part NP2.

A second case is depicted in figure 10. According to figure 10 one resource is allocated for said first connection C1 to connect said predetermined first network part NP1 to said predetermined second network part NP2. Furthermore two other resources are allocated for said first connection C1 to connect said first network part NP1 and said second network part NP2 of said optical network to a predetermined third network part NP3 of said optical network respectively.

As depicted in figure 10 said modified network topology information comprises in said second example different parts and sub-graphs. Said first sub-graph corresponds to said first network part NP1 consisting of network nodes G, Y, J, K, L, R and directly connecting optical links 21 between network nodes G and K, Y and L, K and L, J and K, K and R. Said second sub-graph corresponds to said second network part NP2 consisting of network node X. Additionally a third sub-graph corresponds to said a third network part NP3 consisting of network nodes A, ..., E, I, M, ..., Q, S, T and connecting optical links 21 between network nodes Q and T via network nodes I, E, A, ..., D, M, ..., O.

Then for each of the examples two tables are generated:
In both examples the numeric part of the corresponding network parts NP1, NP2, NP3 of said optical transport network are used as identifier to identify said sub-graphs. The first table comprises a mapping of connections, status of connection, e.g. established or new, path of connection as well as identifier of the sub-graph containing the source and the identifier of the sub-graph containing the destination of said connection.

In said first example according to figure 1 a first table for paths is:

| **Connection** | **Status** | **Source** | **Destination** | **Path** |
|---|---|---|---|---|
| 1 | Established | A | Y | A-B-F-G-Y |
| 2 | New | X | Y | |
| 3 | Established | J | G | J-K-G |

Substituting said sub-graph identifier according to figure 2 results in a second table:

| **Connection** | **Status** | **Source** | **Destination** | **Path** |
|---|---|---|---|---|
| 1 | Established | 2 | 1 | 2-1-2-1-1 |
| 2 | New | 2 | 1 | n.a. |
| 3 | Established | 2 | 1 | 2-1-1 |

In said second example according to figure 9 said first table for paths is:

| **Connection** | **Status** | **Source** | **Destination** | **Path** |
|---|---|---|---|---|
| 1 | Established | I | N | I-J-X-G-Y-N |
| 2 | New | X | Y | |
| 3 | Established | E | B | E-F-B |
| 4 | Established | C | G | C-G |
| 5 | Established | D | Y | D-Y |
| 6 | Established | J | R | J-Q-R |
| 7 | Established | R | L | R-S-L |
| 8 | Established | L | O | L-O |

Substituting said sub-graph identifier according to figure 10 results in said second table for said second example:

| **Connection** | **Status** | **Source** | **Destination** | **Path** |
|---|---|---|---|---|
| 1 | Established | 3 | 3 | 3-1-2-1-1-3 |
| 2 | New | 2 | 1 | n.a. |
| 3 | Established | 3 | 3 | 3-2-3 |
| 4 | Established | 3 | 1 | 3-1 |
| 5 | Established | 3 | 1 | 3-1 |
| 6 | Established | 1 | 1 | 1-3-1 |
| 7 | Established | 1 | 1 | 1-3-1 |
| 8 | Established | 1 | 1 | 1-3 |

Furthermore a first criterion is evaluated to identify a potential candidate connection. Then potential candidates according to said first criterion are identifiable from evaluating said second table.

According to said first criterion said potential candidate connection for rerouting is characterized by a resource allocated for said potential candidate connection to connect said first network part NP1 of said optical network to said second network part NP2 of said optical network. Said resource is preferably occupied hence blocking the optical link 21 providing said resource. In said examples a single wavelength is used as said resource. Hence any allocation results in an occupied resource and a blocked optical link.

For said first example referencing figure 2 and 3 said first connection C1 connecting network nodes A and Y via network nodes B, F, G and said third connection connecting network nodes J and G via network node K meet said first criterion. Hence both result as potential candidates for rerouting using said first criterion.

For said second example referencing figure 9 and 10 said first connection C1 connecting network nodes I and N via network nodes J, X, G, Y, meets said first criterion because it connects said first network part NP1 and said second network part NP2. However said third connection connecting network node E and network note B via network node X doesn't meet said first criterion because it connects said second network part NP2 and said third network part NP3 rather than connecting said first network part NP1 and said second network part NP2. Hence only said first connection C1 result as potential candidate for rerouting.

Searching for transitions between sub-graph 1 and sub-graph 2 in said second table results in said first connection C1 and said third connection 3 as potential candidates for rerouting in said first example.

Searching for transitions between sub-graph 1 and sub-graph 2 in said second table results in said first connection C1 as potential candidate for rerouting in said second example because only the path of said first connection C1 contains transition between sub-graph 1 and sub-graph 2 according to table 2 for said second example. This reduces the amount of candidate connections for rerouting and hence increases the efficiency of the method.

Furthermore a second criterion is evaluated to determine said candidate connection for rerouting.

According to said second criterion a candidate connection is characterized by either another resource allocated for said first connection C1 to connect said first network part NP1 and said second network part NP2 of said optical network or by two other resources allocated for said first connection C1 to connect said first network part NP1 and said second network part NP2 of said optical network to said third network part NP3 of said optical network respectively.

Preferably said potential candidates resulting from the evaluation of said first criterion are considered when evaluating said second criterion.

Said second criterion consist of two variants, labeled variant A and variant B below. The order of evaluation of these variants is arbitrary.

According to both examples both variants are evaluated regardless of the result. However in case a candidate is found already when evaluating the first processed variant the method may continue without evaluating the other variant as well.

According to variant A said potential candidate connection is a candidate connection when it connects two of said network parts NP1, NP2, NP3 of said optical transport network by at least two optical links 21 directly. According to said examples this means that related sub-graphs are connected at least two times. This means that said candidate connection allocates resources on optical links 21 along its path, that connect directly the same two parts of the optical transport network at least twice.

For the first example this is visible referencing figures 2 and 3 or the second table for said first example. Here said first connection C1 connects said first network part NP1 and said second network part NP2 allocating resources on the optical links 21 between network nodes A and B, network nodes B and F and network nodes F and G. This means that along the path of said first connection C1 three optical links 21 directly connect said first network part NP1 and said second network part NP2. This corresponds to sequence 2-1-2-1 in the path in said second table for said first example.

Said third connection according to said first example doesn't allocate resources on at least two optical links 21 directly connecting said first network part NP1 and said second network part NP2. This is visible from figures 2 and 3 where the network nodes J and K belong to different parts but the network nodes K and G belong both to the first network part NP1. Likewise from said second table according to said first example it is derived that the path doesn't contain any section 2-1-2, 2-1-...-1-2, 1-2-1, or 1-2-...-2-1.

For the first example only said first connection C1 results as candidate connection. This means that said first connection C1 is characterized by a path allocating resources on at least two optical links 21 connecting said first network part NP1 and said second network part NP2 of said optical transport network.

This means that in this case the established first connection C1 can be rerouted, because the three optical links 21 allocated between the first network part NP1 and the second network part NP2 can be replaced by rerouting to another path including only one optical link 21 directly connecting said first network part NP1 and said second network part NP2 in case another path is available. This means other optical links 21 can be allocated within the one of said network parts NP1 or NP2.

For the second example no connection results as candidate connection according to the variant A. This is visible in figures 9 and 10, where none of the established connections connect directly the same two parts of the optical transport network at least twice. This result can be determined from said second table considering the path column of said second table for said second example as described above for said first example because the path column doesn't contain the relevant sections 2-1-2, 2-1-...-1-2, 1-2-1, or 1-2-...-2-1.

According to variant B both end points of the candidate connection are in said third network part NP3 outside of said first network part NP1 and said second network part NP2. In the examples this means that the endpoints of said candidate for rerouting are located in another, common, sub-graph outside of affected sub-graphs. In this case this candidate connection can be rerouted when a new path within said third network part NP3 or in said examples said common sub-graph can be found.

Likewise in a more general case the candidate connection could pass further not related parts of the optical transport network or in said examples pass through further sub-graphs. For simplicity and without loss of generality only the case, in which the demand terminates in said common sub-graph.

Considering said second example and referencing figures 9 and 10 said first connection C1 is determined as candidate for rerouting. This can also be derived from said second table according to said second example because the path column contains a path starting and ending in said third sub-graph 3 while passing through said first sub-graph 1 and said second sub-graph 2 respectively.

This means that said first connection C1 is characterized by a path allocating resources on a first optical link 21 connecting said first network part NP1 to said second network part NP2 of said optical network, a second optical link 21 connecting said first network part NP1 to said third network part NP3 of said optical transport network and a third optical link 21 connecting said second network part NP2 to said third network part NP3 of said optical transport network.

If there are multiple candidate connections fulfilling these criteria for example the candidate connection with the shortest path will be selected in order to keep the changes in the network as small as possible. In case multiple candidate connections have the same path length simply the first candidate connection found may be selected.

In any case other candidate connections may be stored in a list for later use, e.g. in case rerouting doesn't succeed using said first connection C1.

Step 172 hence consists of searching in predetermined network topology information said first connection C1 characterized by said first criterion and said second criterion.

Afterwards a step 173 is executed.

In step 173 said candidate connection is rerouted. This means in the example said first connection C1 is rerouted. For example said open shortest path first protocol is used to reroute said first connection.

Preferably, in case the candidate connection satisfies said variant A of said second criterion at least two transitions are identified. A transition comprises of part of a path of said candidate connection that starts at a network node of said first network part NP1 transitions to a network node of said second network part NP2 and transitions back to a network node of said first network part NP1 to end there. Likewise said transition, may comprise of part of said path of said candidate connection that starts at a network node of said second network part NP2 transitions to a network node of said first network part NP1 and transitions back to a network node of said second network part NP2. Said transition hence comprises of at least two optical links 21 characterized by connecting directly said first network part NP1 and said second network part NP2.

Referencing figure 3 for said first example two such transitions have to be considered. Using said first sub-graph and said second sub-graph a transition may be identified as a sequence 2-1-2, 2-1-...-1-2, 1-2-1, or 1-2-...-2-1 within part of said path of said candidate connection. The sequences 2-1-...-1-2 or 1-2-...-2-1 in this case may only contain two transitions between said first sub-graph and said second sub-graph.

In said first example a first transition along network nodes A, B and F and a second transition along network nodes B, F and G are identified. The identified transition are for example stored in storage with said modified network topology information.

Said transitions are selected one by one as connection between said first network part NP1 and said second network part NP2. When a graph is used, the edges resembling said transitions are inserted one by one to generate a modified graph comprising said first sub-graph, said second sub-graph and said edge connecting them. In any case a new path for rerouting said candidate connection is determined for any available transition. The new paths are determined each for example using said open shortest path first protocol. In case multiple new paths are found for example the shortest path is selected.

The new paths are for example stored in storage with said modified network topology information for further processing.

In said first example for said first transition a first new path is determined this way. The first new path is along network nodes A, B, C, D, Y.

For said second transition two new paths are determined. A second new path is along network nodes A, E, F, B, C, D, Y and a third new path is along network nodes A, E, F, G, C, D, Y.

Selecting the shortest of the new paths results in a path for rerouting, in the example along network nodes A, B, C, D, Y because it requires only five hops compared to seven hops of the other paths.

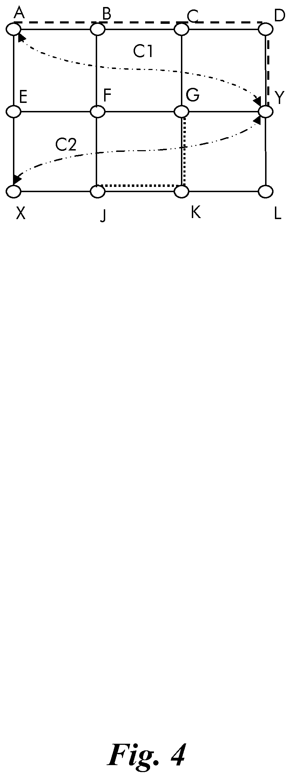

This results in the allocation of resources along said new path for said first connection C1 now containing network nodes A, B, C, D, Y as depicted in figure 4.

Preferably, in case the candidate connection satisfies said variant B of said second criterion said candidate connection starts and ends in said third network part NP3. In this case rerouting is attempted only within said third network part NP3 in order to avoid any transition to other parts of said optical transport network. For example said open shortest path first protocol is applied only considering said third network part NP3.

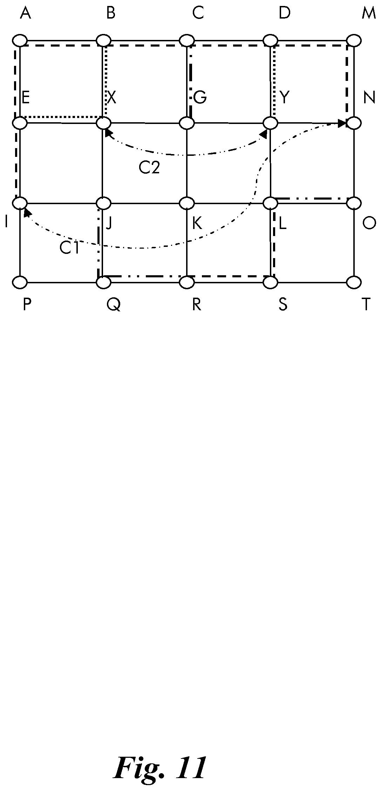

As depicted in figure 9 and figure 10 in said second example said third network part NP3 provides a single new path along network nodes I, E, A, B, C, D, M, N for said first connection C1. The result of rerouting said first connection C1 along this new path is depicted in figure 11.

In case multiple new paths are found this way the shortest path may be used.

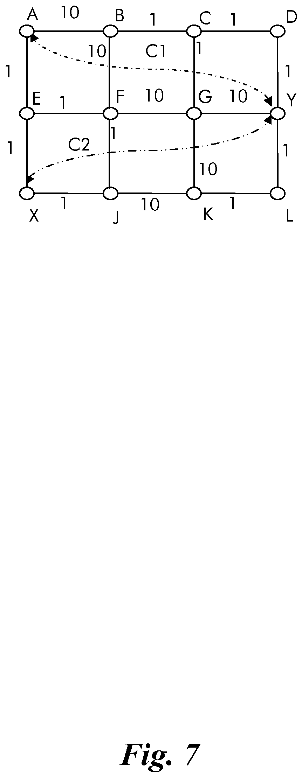

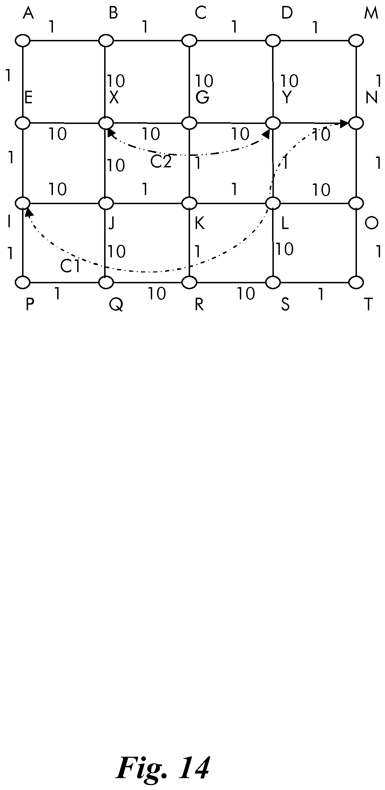

Alternatively rerouting takes into consideration a weight for any of said optical links 21. As depicted in figures 7 and 14 as cost of an optical link the weight 1 is selected for any optical link 21 that is not occupied and the weight 10 is selected for any optical link 21 that is occupied. According to the examples this way the sub-graphs are connected by optical links with higher weights. Then a routing algorithm considering the weight of said optical links is used to determine the new path using a minimum cost criterion. For said two examples is the same path results.

In case multiple shortest paths of the same length are found for example the first paths found is used.

The result of said rerouting may be stored in said modified network topology information.

Afterwards a step 174 is executed.

In step 174 a fourth network part NP4 of said optical transfer network is determined. Said fourth network part NP4 is determined the same way as describe for said first network part NP1, said second network part NP2 or said third network part NP3. To determine said fourth network part NP4 however the result of rerouting said first connection C1 is considered. Said result of said rerouting is for example read from said stored modified network topology information.

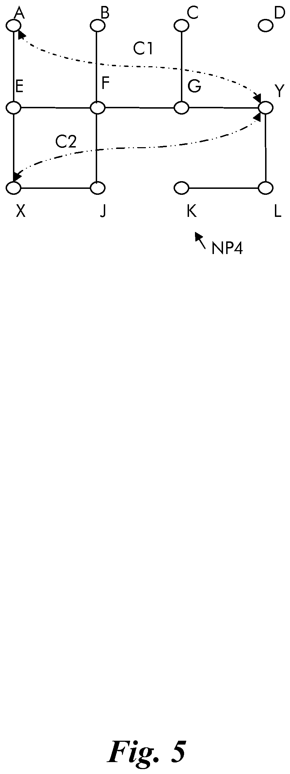

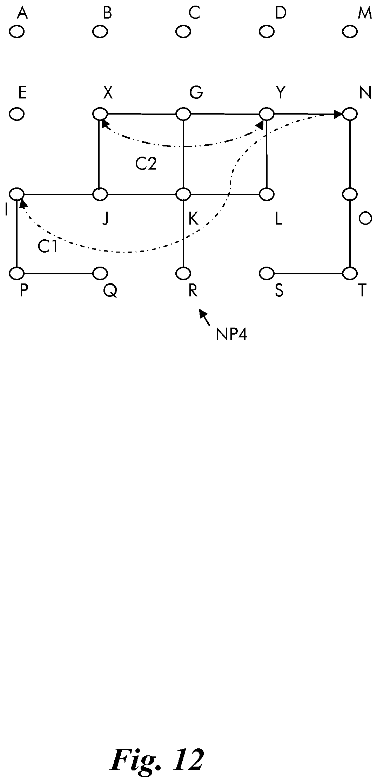

In said examples a fourth sub-graph for said forth part NP4 is determined by eliminating all edges resembling optical links 21 with occupied resource. Said fourth sub-graph is depicted in figure 5 for said first example and in figure 12 for said second example.

Afterwards a step 175 is executed.

In said step 175 the new demand is routed considering only said fourth network part NP4. For example said open shortest path first protocol is applied only considering said fourth network part NP4. In said examples said fourth sub-graph is considered only. This means that said second connection C2 is determined as new demand for connecting said first network node X and said second network node Y by determining said path for said second connection C2 within said predetermined fourth network part NP4 of said optical transport network

Afterwards said method ends.

Figure 15 depicts said optical transport network according to said first example. Figure 16 depicts said optical transport network according to said second example.

For both examples a device 100 depicted in figures 15 and 16 for operating said optical transport network is described below. Said device 100 comprises means 104 for detecting said demand for connecting said first network node X of said predetermined first network part NP1 of said optical transport network and said second network node Y of said predetermined second network part NP2 of said optical transport network. This means 104 is for example an input configured to receive information about new demands. In said examples said input is configured to communicate with a network management system or control plane instance, e.g. said GMPLS routing engine (GMRE). Likewise said PCE may be used.

In the example incoming new demands are detected when they are received by said input.

Said device 100 comprises means 101 for searching in predetermined network topology information said candidate connection. In said examples a processor is configured to search said candidate connection using said first criterion and said second criterion. Said processor is configure to determine said potential candidate connection characterized by said resource allocated for said first connection C1 to connect said predetermined first network part NP1 of said optical network to said predetermined second network part NP2 of said optical network. Furthermore said processor is configured to determine said candidate connection from said potential candidate connection characterized by either another resource allocated for said first connection C1 to connect said first network part NP1 and said second network part NP2 of said optical network or two other resources allocated for said first connection C1 to connect said first network part NP1 and said second network part NP2 of said optical network to said predetermined third network part NP3 of said optical network respectively. In said examples said processor is configured to access a predetermined graph representation of said network topology of said optical transport network to remove any edge of said predetermined graph representing an occupied optical link 21 to determine sub-graphs representing said network parts NP1, NP2, NP3, NP4 of said optical transport network.

Furthermore said device 100 comprises means 102 for routing adapted to reroute said candidate connection. Said means 102 is in the example an output configured to communicate with respective network nodes of said optical network via data links depicted schematically as dashed lines in figures 15 and 16. The data link may be a transmission control protocol / internet protocol link (well know as TCP/IP). Any other data link may be used as well. In any case said network nodes and said output are adapted to communicate routing information via said data link.

Alternatively said output may connect to said management system or control plane instance, e.g. said GMPLS routing engine (GMRE), to send routing information for rerouting said candidate connection.

Routing information or information regarding the network topology may be exchanged in a process or using a corresponding processor that is either part of an existing management/control plane system or can preferably be implemented as an application on top of a software-defined networking SDN controller.

Said means 102 for routing is further adapted determine said new paths using transitions or alternatively taking into consideration said weight to determine said new path using said minimum cost criterion as describe above.

Said means 102 for routing is adapted to route said second connection C2 between said first network node X of said first network part NP1 and said second network node Y of said second network part NP2 along a path allocating at least said resource upon successful rerouting of said first connection C1.

Furthermore said means 102 for routing is adapted to determine said second connection C2 by determining said path for said second connection C2 within said predetermined fourth network part NP4 of said optical transport network.

Furthermore said device 100 comprises means 103 for determining said network parts from said predetermined network topology information so that the respective of said network parts NP1, NP2, NP3, NP4 of said optical transport network is characterized in that the resource of any optical link 21 separating the respective of said network parts NP1, NP2, NP3, NP4 from the rest of the optical transport network is occupied, and in that the resource of any optical link 21 contained in said network part NP1, NP2, NP3, NP4 is not occupied.

Said means 103 is for example a processor adapted to access storage to read said predetermined network topology information, read and store said modified network topology information and configured to generate said modified network topology information from said predetermined network topology information as described above.

The description and drawings merely illustrate the principles of the invention. It will thus be appreciated that those skilled in the art will be able to devise various arrangements that, although not explicitly described or shown herein, embody the principles of the invention. All statements herein reciting principles, aspects, and embodiments of the invention, as well as specific examples thereof, are intended to encompass equivalents thereof.

The functions of the various elements shown in the figures, including any functional blocks labelled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that the flow chart represents various processes which may be substantially represented in computer readable medium and so executed by a computer or processor, whether or not such computer or processor is explicitly shown.

## Claims

1. A method of operating an optical transport network comprising,
- detecting (171) a demand for connecting a first network node (X) of a predetermined first network part (NP1) of said optical transport network and a second network node (Y) of a predetermined second network part (NP2) of said optical transport network,
**characterized by**
- searching (172) in predetermined network topology information a first connection (C1) **characterized by**
a resource allocated for said first connection (C1) to connect said predetermined first network part (NP1) of said optical network to said predetermined second network part (NP2) of said optical network, and
either another resource allocated for said first connection (C1) to connect said first network part (NP1) and said second network part (NP2) of said optical network or two other resources allocated for said first connection (C1) to connect said first network part (NP1) and said second network part (NP2) of said optical network to a predetermined third network part (NP3) of said optical network respectively,
- rerouting (173) said first connection (C1).

2. The method according to claim 1, wherein said resource is occupied.

3. The method according to claim 1 or 2, comprising routing (175) a second connection (C2) between said first network node (X) of said first network part (NP1) and said second network node (Y) of said second network part (NP2) along a path allocating at least said resource upon successful rerouting of said first connection (C1).

4. The method according to claim 3 , further comprising routing (175) said second connection (C2) by determining (174) said path for said second connection (C2) within a predetermined fourth network part (NP4) of said optical transport network.

5. The method according to any of the aforementioned claims, comprising determining (171) from said predetermined network topology information a network part (NP1, NP2, NP3, NP4) of said optical transport network, **characterized in that** the resource of any optical link (21) separating said network part (NP1, NP2, NP3, NP4) from the rest of the optical transport network is occupied, and that the resource of any optical link (21) contained in said network part (NP1, NP2, NP3, NP4) is not occupied.

6. The method according to any of the aforementioned claims, wherein said first connection (C1) is **characterized by** a path allocating resources on at least two optical links (21) connecting said first network part (NP1) and said second network part (NP2) of said optical transport network.

7. The method according to any of the aforementioned claims, wherein said first connection (C1) is **characterized by** a path allocating resources on a first optical link (21) connecting said first network part (NP1) to said second network part (NP2) of said optical network, a second optical link (21) connecting said first network part (NP1) to said third network part (NP3) of said optical transport network and a third optical link (21) connecting said second network part (NP2) to said third network part (NP3) of said optical transport network.

8. The method according to claim 4 , wherein determining said first network part (NP1), said second network part (NP2), said third network part (NP3) or said fourth network part (NP4) of said optical transport network comprises accessing memory comprising a predetermined graph representation of said network topology of said optical transport network to remove any edge of said predetermined graph representing an occupied optical link (21) to determine sub-graphs representing said network parts (NP1, NP2, NP3, NP4) of said optical transport network.

9. The method according to any of the aforementioned claims, wherein said resource is a data container or a wavelength of an optical link (21).

10. A device (100) for operating an optical transport network comprising
- means (104) for detecting a demand for connecting a first network node (X) of a predetermined first network part (NP1) of said optical transport network and a second network node (Y) of a predetermined second network part (NP2) of said optical transport network,
**characterized by**
- means (101) for searching in predetermined network topology information a first connection (C1) **characterized by**
a resource allocated for said first connection (C1) to connect said predetermined first network part (NP1) of said optical network to said predetermined second network part (NP2) of said optical network, and
either another resource allocated for said first connection (C1) to connect said first network part (NP1) and said second network part (NP2) of said optical network or two other resources allocated for said first connection (C1) to connect said first network part (NP1) and said second network part (NP2) of said optical network to a predetermined third network part (NP3) of said optical network respectively,
- means (102) for routing adapted to reroute said first connection (C1).

11. The device (100) according to claim 10, wherein said means (102) for routing is adapted to route a second connection (C2) between said first network node (X) of said first network part (NP1) and said second network node (Y) of said second network part (NP2) along a path allocating at least said resource upon successful rerouting of said first connection (C1).

12. The device (100) according to claim or 11, wherein the means (102) for routing is adapted to determine said second connection (C2) by determining said path for said second connection (C2) within a predetermined fourth network part (NP4) of said optical transport network.

13. The device (100) according to any of claims 10 to 12, comprising means (103) for determining in said optical transport network from said predetermined network topology information a network part (NP1, NP2, NP3, NP4) of said optical transport network, **characterized in that** the resource of any optical link (21) separating said network part (NP1, NP2, NP3, NP4) from the rest of the optical transport network is occupied, and **in that** the resource of any optical link (21) contained in said network part (NP1, NP2, NP3, NP4) is not occupied.

14. The device (100) according to any of claims 10 to 13, wherein said first connection (C1) is **characterized by** a path allocating resources on at least two optical links (21) connecting said first network part (NP1) to said second network part (NP2) of said optical network.

15. The device (100) according any of claims 10 to 13, wherein said first connection (C1) is **characterized by** a path allocating resources on a first optical link (21) connecting said first network part (NP1) to said second network part (NP2) of said optical network, a second optical link (21) connecting said first network part (NP1) to said third network part (NP3) of said optical transport network and a third optical link (21) connecting said second network part (NP2) to said third network part (NP3) of said optical transport network.

16. The device according to claims 10 to 15, wherein said resource is a preferably occupied, data container or a, preferably occupied, wavelength of an optical link.

## Patentansprüche

1. Verfahren für den Betrieb eines optischen Transportnetzwerks, umfassend:
- das Detektieren (171) einer Anfrage zum Verbinden eines ersten Netzwerkknotens (X) eines vorgegebenen ersten Netzwerkteils (Network Part, NP1) besagten optischen Transportnetzwerks mit einem zweiten Netzwerkknoten (Y) eines vorgegebenen zweiten Netzwerkteils (NP2),
**gekennzeichnet durch**
- das Suchen (172) in Informationen zu einer vorgegebenen Netzwerktopologie nach einer ersten Verbindung (Connection, C1), die **gekennzeichnet ist durch**
eine besagter erster Verbindung (C1) zugewiesene Ressource zum Verbinden des besagten, vorgegebenen ersten Netzwerkteils (NP1) besagten optischen Netzwerks mit dem besagten, vorgegebenen zweiten Netzwerkteil (NP2) besagten optischen Netzwerks, und
entweder eine weitere, besagter erster Verbindung (C1) zugewiesene Ressource zum Verbinden besagten ersten Netzwerkteils (NP1) mit besagtem zweitem Netzwerkteil (NP2) besagten optischen Netzwerks, oder zwei weitere, besagter erster Verbindung (C1) zugewiesene Ressourcen zum Verbinden besagten ersten Netzwerkteils (NP1) und besagten zweiten Netzwerkteils (NP2) besagten optischen Netzwerks jeweils mit einem vorgegebenen dritten Netzwerkteil (NP3) besagten optischen Netzwerks,
- das Umleiten (173) besagter erster Verbindung (C1).

2. Verfahren nach Anspruch 1, wobei besagte Ressource besetzt ist.

3. Das Verfahren nach Anspruch 1 oder 2, umfassend das Routen (175) einer zweiten Verbindung (C2) zwischen besagtem erstem Netzwerkknoten (X) besagten ersten Netzwerkteils (NP1) und besagtem zweitem Netzwerkknoten (Y) besagten zweiten Netzwerkteils (NP2) entlang einem Pfad, dazu mindestens besagte Ressource auf das erfolgreiche Umleiten der besagten, ersten Verbindung (C1) hin zuweisend.

4. Das Verfahren nach Anspruch 3, weiterhin das Routen (175) besagter zweiter Verbindung (C2) durch das Bestimmen (174) besagten Pfads für besagte zweite Verbindung (C2) innerhalb eines vorgegebenen, vierten Netzwerkteils (NP4) besagten optischen Transportnetzwerks umfassend.

5. Das Verfahren nach einem jeglichen der vorgenannten Ansprüche, wobei das Verfahren umfasst, auf der Grundlage der besagten Informationen zur vorgegebenen Netzwerktopologie einen Netzwerkteil (NP1, NP2, NP3, NP4) besagten optischen Transportnetzwerks zu bestimmen (171), **dadurch gekennzeichnet, dass** die Ressource eines beliebigen optischen Links (21), der besagten Netzwerkteil (NP1, NP2, NP3, NP4) vom Rest des optischen Transportnetzwerks trennt, belegt ist, sowie **dadurch gekennzeichnet, dass** die Ressource eines beliebigen, in besagtem Netzwerkteil (NP1, NP2, NP3, NP4) enthaltenen optischen Links (21) nicht belegt ist.

6. Das Verfahren nach einem jeglichen der vorgenannten Ansprüche, wobei besagte erste Verbindung (C1) charakterisiert ist durch Pfadzuweisungsressourcen auf mindestens zwei optischen Links (21), welche besagten ersten Netzwerkteil (NP1) und besagten zweiten Netzwerkteil (NP2) besagten optischen Transportnetzwerks verbinden.

7. Das Verfahren nach einem jeglichen der vorgenannten Ansprüche, wobei besagte erste Verbindung (C1) charakterisiert ist jeweils durch Pfadzuweisungsressourcen auf einem ersten optischen Link (21), besagten ersten Netzwerkteil (NP1) mit besagtem zweitem Netzwerkteil (NP2) besagten optischen Transportnetzwerks verbindend, auf einem zweiten optischen Link (21), besagten ersten Netzwerkteil (NP1) mit besagtem drittem Netzwerkteil (NP3) besagten optischen Transportnetzwerks verbindend, und auf einem dritten optischen Link (21), besagten zweiten Netzwerkteil (NP2) mit besagtem drittem Netzwerkteil (NP3) besagten optischen Transportnetzwerks verbindend.

8. Das Verfahren nach Anspruch 4, wobei das Bestimmen besagten ersten Netzwerkteils (NP1), besagten zweiten Netzwerkteils (NP2), besagten dritten Netzwerkteils (NP3) und besagten vierten Netzwerkteils (NP4) besagten optischen Transportnetzwerks den Zugriff auf einen Speicher umfasst, weicher eine vorgegebene Graphendarstellung besagter Netzwerktopologie besagten optischen Transportnetzwerks umfasst, um jedwede Ecke aus besagtem Graphen zu entfernen, die einen belegten optischen Link (21) repräsentiert, um Sub-Graphen zu bestimmen, welche besagte Netzwerkteile (NP1, NP2, NP3, NP4) besagten optischen Transportnetzwerks repräsentieren.

9. Das Verfahren nach einem jeglichen der vorgenannten Ansprüche, wobei besagte Ressource ein Datencontainer oder eine Wellenlänge eines optischen Links (21) ist.

10. Vorrichtung (100) für den Betrieb eines optischen Transportnetzwerks, umfassend:
- Mittel (104) für das Detektieren einer Anfrage zum Verbinden eines ersten Netzwerkknotens (X) eines vorgegebenen ersten Netzwerkteils (NP1) besagten optischen Transportnetzwerks mit einem zweiten Netzwerkknoten (Y) eines vorgegebenen zweiten Netzwerkteils (NP2),
**gekennzeichnet durch**
- Mittel (101) für das Suchen in Informationen zu einer vorgegebenen Netzwerktopologie nach einer ersten Verbindung (C1), die **gekennzeichnet ist durch**
eine besagter erster Verbindung (C1) zugewiesene Ressource zum Verbinden des besagten, vorgegebenen ersten Netzwerkteils (NP1) besagten optischen Netzwerks mit dem besagten, vorgegebenen zweiten Netzwerkteil (NP2) besagten optischen Netzwerks, und
entweder eine weitere, besagter erster Verbindung (C1) zugewiesene Ressource zum Verbinden besagten ersten Netzwerkteils (NP1) mit besagtem zweitem Netzwerkteil (NP2) besagten optischen Netzwerks, oder zwei weitere, besagter erster Verbindung (C1) zugewiesene Ressourcen zum Verbinden besagten ersten Netzwerkteils (NP1) und besagten zweiten Netzwerkteils (NP2) besagten optischen Netzwerks jeweils mit einem vorgegebenen dritten Netzwerkteil (NP3) besagten optischen Netzwerks,
- Routingmittel (102), ausgelegt für das Umleiten besagter erster Verbindung (C1).

11. Die Vorrichtung (100) nach Anspruch 10, wobei besagtes Routingmittel (102) ausgelegt ist für das Routen einer zweiten Verbindung (C2) zwischen besagtem erstem Netzwerkknoten (X) besagten ersten Netzwerkteils (NP1) und besagtem zweitem Netzwerkknoten (Y) besagten zweiten Netzwerkteils (NP2) entlang einem Pfad, dazu mindestens besagte Ressource auf das erfolgreiche Umleiten der besagten, ersten Verbindung (C1) hin zuweisend.

12. Die Vorrichtung (100) nach Anspruch 10 oder 11, wobei das Routingmittel (102) ausgelegt ist für das Bestimmen besagter zweiter Verbindung (C2) durch das Bestimmen besagten Pfads für besagte zweite Verbindung (C2) innerhalb eines vorgegebenen, vierten Netzwerkteils (NP4) besagten optischen Transportnetzwerks.

13. Die Vorrichtung (100) nach einem jeglichen der Ansprüche 10 bis 12, Mittel (103) umfassend, um in dem besagten, optischen Transportnetzwerk auf der Grundlage der besagten Informationen zur vorgegebenen Netzwerktopologie einen Netzwerkteil (NP1, NP2, NP3, NP4) besagten optischen Transportnetzwerks zu bestimmen (103), **dadurch gekennzeichnet, dass** die Ressource eines beliebigen optischen Links (21), der besagten Netzwerkteil (NP1, NP2, NP3, NP4) vom Rest des optischen Transportnetzwerks trennt, belegt ist, sowie **dadurch gekennzeichnet, dass** die Ressource eines beliebigen, in besagtem Netzwerkteil (NP1, NP2, NP3, NP4) enthaltenen optischen Links (21) nicht belegt ist.

14. Die Vorrichtung (100) nach einem jeglichen der Ansprüche 10 bis 13, wobei besagte erste Verbindung (C1) charakterisiert ist durch Pfadzuweisungsressourcen auf mindestens zwei optischen Links (21), welche besagten ersten Netzwerkteil (NP1) mit besagtem zweitem Netzwerkteil (NP2) besagten optischen Transportnetzwerks verbinden.

15. Die Vorrichtung (100) nach einem jeglichen der Ansprüche 10 bis 13, wobei besagte erste Verbindung (C1) charakterisiert ist jeweils durch Pfadzuweisungsressourcen auf einem ersten optischen Link (21), besagten ersten Netzwerkteil (NP1) mit besagtem zweitem Netzwerkteil (NP2) besagten optischen Transportnetzwerks verbindend, auf einem zweiten optischen Link (21), besagten ersten Netzwerkteil (NP1) mit besagtem drittem Netzwerkteil (NP3) besagten optischen Transportnetzwerks verbindend, und auf einem dritten optischen Link (21), besagten zweiten Netzwerkteil (NP2) mit besagtem drittem Netzwerkteil (NP3) besagten optischen Transportnetzwerks verbindend.

16. Die Vorrichtung nach den Ansprüchen 10 bis 15, wobei besagte Ressource ein vorzugsweise belegter Datencontainer oder eine vorzugsweise belegte Wellenlänge eines optischen Links ist.

## Revendications

1. Procédé permettant d'exploiter un réseau de transport optique, comprenant l'étape suivante :
- détecter (171) une demande pour connecter un premier noeud de réseau (X) d'une première partie de réseau prédéterminée (NP1) dudit réseau de transport optique et un deuxième noeud de réseau (Y) d'une deuxième partie de réseau prédéterminée (NP2) dudit réseau de transport optique,
**caractérisé par** les étapes suivantes :
- rechercher (172) dans des informations de topologie de réseau prédéterminées une première connexion (C1) **caractérisée par**
une ressource allouée pour ladite première connexion (C1) pour connecter ladite première partie de réseau prédéterminée (NP1) dudit réseau optique à ladite deuxième partie de réseau prédéterminé (NP2) dudit réseau optique, et
soit une autre ressource allouée pour ladite première connexion (C1) pour connecter ladite première partie de réseau (NP1) et ladite deuxième partie de réseau (NP2) dudit réseau optique soit deux autres ressources allouées pour ladite première connexion (C1) pour connecter ladite première partie de réseau (NP1) et ladite deuxième partie de réseau (NP2) dudit réseau optique à une troisième partie de réseau prédéterminée (NP3) dudit réseau optique respectivement,
- rerouter (173) ladite première connexion (C1).

2. Procédé selon la revendication 1, dans lequel ladite ressource est occupée.

3. Procédé selon la revendication 1 ou 2, comprenant le routage (175) d'une deuxième connexion (C2) entre ledit premier noeud de réseau (X) de ladite première partie de réseau (NP1) et ledit deuxième noeud de réseau (Y) de ladite deuxième partie de réseau (NP2) le long d'un trajet allouant au moins ladite ressource lors du reroutage réussi de ladite première connexion (C1).

4. Procédé selon la revendication 3, comprenant en outre le routage (175) de ladite deuxième connexion (C2) en déterminant (174) ledit trajet pour ladite deuxième connexion (C2) à l'intérieur d'une quatrième partie de réseau prédéterminée (NP4) dudit réseau de transport optique.

5. Procédé selon l'une quelconque des revendications précédentes, comprenant la détermination (171) à partir desdites informations de topologie de réseau prédéterminées, d'une partie de réseau (NP1, NP2, NP3, NP4) dudit réseau de transport optique, **caractérisé en ce que** la ressource d'une quelconque liaison optique (21) séparant ladite partie de réseau (NP1, NP2, NP3, NP4) du reste du réseau de transport optique est occupée, et que la ressource d'une quelconque liaison optique (21) contenue dans ladite partie de réseau (NP1, NP2, NP3, NP4) n'est pas occupée.

6. Procédé selon l'une quelconque des revendications précédentes, dans lequel ladite première connexion (C1) est **caractérisée par** un trajet allouant des ressources sur au moins deux liaisons optiques (21) connectant ladite première partie de réseau (NP1) et ladite deuxième partie de réseau (NP2) dudit réseau de transport optique.

7. Procédé selon l'une quelconque des revendications précédentes, dans lequel ladite première connexion (C1) est **caractérisée par** un trajet allouant des ressources sur une première liaison optique (21) connectant ladite première partie de réseau (NP1) à ladite deuxième partie de réseau (NP2) dudit réseau optique, une deuxième liaison optique (21) connectant ladite première partie de réseau (NP1) à ladite troisième partie de réseau (NP3) dudit réseau de transport optique et une troisième liaison optique (21) connectant ladite deuxième partie de réseau (NP2) à ladite troisième partie de réseau (NP3) dudit réseau de transport optique.

8. Procédé selon la revendication 4, dans lequel la détermination de ladite première partie de réseau (NP1), de ladite deuxième partie de réseau (NP2), de ladite troisième partie de réseau (NP3) ou de ladite quatrième partie de réseau (NP4) dudit réseau de transport optique comprend l'accès à une mémoire comprenant une représentation de graphe prédéterminée de ladite topologie de réseau dudit réseau de transport optique pour supprimer toute arête dudit graphe prédéterminé représentant une liaison optique occupée (21) pour déterminer des sous-graphes représentant lesdites parties de réseau (NP1, NP2, NP3, NP4) dudit réseau de transport optique.

9. Procédé selon l'une quelconque des revendications précédentes, dans lequel ladite ressource est un conteneur de données ou une longueur d'onde d'une liaison optique (21).

10. Dispositif (100) pour exploiter un réseau de transport optique comprenant
- des moyens (104) pour détecter une demande pour connecter un premier noeud de réseau (X) d'une première partie de réseau prédéterminée (NP1) dudit réseau de transport optique et un deuxième noeud de réseau (Y) d'une deuxième partie de réseau prédéterminée (NP2) dudit réseau de transport optique,
**caractérisé par**
- des moyens (101) pour rechercher dans des informations de topologie de réseau prédéterminées une première connexion (C1) **caractérisée par**
une ressource allouée pour ladite première connexion (C1) pour connecter ladite première partie de réseau prédéterminée (NP1) dudit réseau optique à ladite deuxième partie de réseau prédéterminé (NP2) dudit réseau optique, et
soit une autre ressource allouée pour ladite première connexion (C1) pour connecter ladite première partie de réseau (NP1) et ladite deuxième partie de réseau (NP2) dudit réseau optique soit deux autres ressources allouées pour ladite première connexion (C1) pour connecter ladite première partie de réseau (NP1) et ladite deuxième partie de réseau (NP2) dudit réseau optique à une troisième partie de réseau prédéterminée (NP3) dudit réseau optique respectivement,
- des moyens (102) pour router adaptés pour rerouter ladite première connexion (C1).

11. Dispositif (100) selon la revendication 10, dans lequel lesdits moyens (102) pour router sont adaptés pour router une deuxième connexion (C2) entre ledit premier noeud de réseau (X) de ladite première partie de réseau (NP1) et ledit deuxième noeud de réseau (Y) de ladite deuxième partie de réseau (NP2) le long d'un trajet allouant au moins ladite ressource lors du reroutage réussi de ladite première connexion (C1).

12. Dispositif (100) selon la revendication 10 ou 11, dans lequel les moyens (102) pour router sont adaptés pour déterminer ladite deuxième connexion (C2) en déterminant ledit trajet pour ladite deuxième connexion (C2) à l'intérieur d'une quatrième partie de réseau prédéterminée (NP4) dudit réseau de transport optique.

13. Dispositif (100) selon l'une quelconque des revendications 10 à 12, comprenant des moyens (103) pour déterminer dans ledit réseau de transport optique à partir desdites informations de topologie de réseau prédéterminées une partie de réseau (NP1, NP2, NP3, NP4) dudit réseau de transport optique, **caractérisé en ce que** la ressource d'une quelconque liaison optique (21) séparant ladite partie de réseau (NP1, NP2, NP3, NP4) du reste du réseau de transport optique est occupée, et **en ce que** la ressource d'une quelconque liaison optique (21) contenue dans ladite partie de réseau (NP1, NP2, NP3, NP4) n'est pas occupée.

14. Dispositif (100) selon l'une quelconque des revendications 10 à 13, dans lequel ladite première connexion (C1) est **caractérisée par** un trajet allouant des ressources sur au moins deux liaisons optiques (21) connectant ladite première partie de réseau (NP1) à ladite deuxième partie de réseau (NP2) dudit réseau optique.

15. Dispositif (100) selon l'une quelconque des revendications 10 à 13, dans lequel ladite première connexion (C1) est **caractérisée par** un trajet allouant des ressources sur une première liaison optique (21) connectant ladite première partie de réseau (NP1) à ladite deuxième partie de réseau (NP2) dudit réseau optique, une deuxième liaison optique (21) connectant ladite première partie de réseau (NP1) à ladite troisième partie de réseau (NP3) dudit réseau de transport optique et une troisième liaison optique (21) connectant ladite deuxième partie de réseau (NP2) à ladite troisième partie de réseau (NP3) dudit réseau de transport optique.

16. Dispositif selon les revendications 10 à 15, dans lequel ladite ressource est un conteneur de données, de préférence occupé, ou une longueur d'onde, de préférence occupée, d'une liaison optique.
